(19) Europäisches Patentamt
European Patent Office
Office européen des brevets

(11) EP 3 035 755 A1

(12) EUROPEAN PATENT APPLICATION

(43) Date of publication:
22.06.2016 Bulletin 2016/25

(51) Int Cl.:
$H04W\ 72/04$ (2009.01)

(21) Application number: 14307098.5

(22) Date of filing: 19.12.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ALCATEL LUCENT
92100 Boulogne-Billancourt (FR)

(72) Inventors:
• Weber, Andreas
70435 Stuttgart (DE)

• Wild, Thorsten
70435 Stuttgart (DE)
• Fetscher, Robert
70435 Stuttgart (DE)

(74) Representative: Hofmann, Dirk et al
Alcatel-Lucent Deutschland AG
Intellectual Property Business Group
Lorenzstrasse 10
70435 Stuttgart (DE)

(54) **Method for reporting channel feedback in a radio communication system, method for determining a set of mobile stations to be scheduled in a radio communication system, computer program, mobile station and scheduler apparatus thereof**

(57) The embodiments of the invention relate to a method for reporting channel feedback in a radio communication system (RCS). The method contains receiving serving cell pilot signals of a serving radio cell (C1, C2, C6) and neighboring cell pilot signals of at least one neighboring radio cell (C1, ..., C6) of the serving radio cell (C1, C2, C6). The method further contains determining for the serving radio cell (C1, C2, C6) based on the received serving cell pilot signals at least one serving cell feedback parameter that maximizes a predefined serving cell quality criterion for receiving at a mobile station (MS1, ..., MS5) wanted signals from a base station (BS1, BS2) operating the serving radio cell (C1, C2, C6). The method even further contains determining for the at least one neighboring radio cell (C1, ..., C6) based on the received neighboring pilot signals at least one neighboring cell feedback parameter that maximizes a predefined neighboring cell quality criterion for receiving at the mobile station (MS1, ..., MS5) interference signals from a base station (BS1, BS2) operating the at least one neighboring radio cell (C1, ..., C6) with a constraint that serving channel receive weights as determined for the serving radio cell (C1, C2, C6) using the predefined serving cell quality criterion are applied as fixed receive weights for a determination of the at least one neighboring cell feedback parameter. The method even further contains transmitting serving cell feedback information about the at least one serving cell feedback parameter and neighboring cell feedback information about the at least one neighboring cell feedback parameter. The embodiments of the invention further relate to a method for determining based on the at least one serving cell feedback parameter and based on the at least one neighboring cell feedback parameter a set of mobile stations to be scheduled in the radio communication system (RCS), to a computer program, to a mobile station (MS1, ..., MS5) and to a scheduler apparatus (SA).

FIG. 1

**Description**

**FIELD OF THE INVENTION**

The present invention relates to channel quality indicator feedback reporting in a radio communication system and, more particularly but not exclusively, to feedback reporting for downlink coordinated multipoint coordinated scheduling coordinated beamforming.

**BACKGROUND OF THE INVENTION**

This section introduces aspects that may be helpful in facilitating a better understanding of the invention. Accordingly, the statements of this section are to be read in this light and are not to be understood as admission about what is in the prior art.

Conventionally, a DL CoMP scheduler (DL = downlink, CoMP = Coordinated Multipoint) tries to optimize a set of co-scheduled mobile stations inside a so-called CoMP cluster which are scheduled on same time frequency radio resources. For this purpose it is essential to predict data throughputs of mobile stations in a candidate set of mobile stations. With CoMP CQI feedback (CQI = Channel Quality Indicator) as specified in 3GPP 36.213 specification (3GPP = Third Generation Partnership Project) of Release 11 such a prediction is not possible for all types of coordination. Especially by applying a measurement technique according to Release 11 it is not possible for a mobile station which is located in a serving radio cell to predict an interference level of interference signals from a neighbor radio cell of the serving radio cell, neither for a measured "optimal" interferer pre-coding (a.k.a. "worst companion"), nor for any other pre-coding. The only detection which is possible is that an interference level is lower if a pre-coding other than the worst companion is chosen. A further quantitative statement (e.g. "how much lower?") is not possible.

Based on Release 11 a mobile station determines an optimal set of an RI (RI = Rank Indicator), a CQI (CQI = Channel Quality Indicator) and a PMI (PMI = Pre-coding Matrix Indicator) for every transmit layer and for the serving radio cell and for a small number of interfering radio cells which are radio cells that belong to the CoMP cluster. The mobile station periodically feeds back a feedback report which contains the optimal sets. The feedback reports allow base stations to optimally serve corresponding mobile stations in case of fast switching between radio cells. However, such feedback reports are not very helpful in case of CS/CB (CS/CB = Coordinated Scheduling Coordinated Beamforming). This is due to the fact that for a determination of every set of RI, CQI and PMI individually best receive weights for reception of wanted signal or interfering signals are applied at the mobile stations. Consequently, a prediction of interference power received at the mobile stations and generated by co-scheduled transmissions in neighboring interfering radio cells is not accurate because during a transmission of a transport block from a serving radio cell and a reception of the transport block at a mobile station the mobile station applies only a set of receive weights dedicated for the serving radio cell, which optimizes a signal strength for the reception of the transport block.

**SUMMARY**

Objects of the embodiments of the invention are to provide feedback reports which are optimized for coordinated scheduling coordinated beamforming and to optimize a selection of a set of mobile stations for coordinated scheduling coordinated beamforming.

The objects are achieved by a method for reporting channel feedback in a radio communication system. The method for reporting the channel feedback contains receiving serving cell pilot signals of a serving radio cell and neighboring cell pilot signals of at least one neighboring radio cell of the serving radio cell. The method for reporting the channel feedback further contains determining for the serving radio cell based on the received serving cell pilot signals at least one serving cell feedback information parameter that maximizes a predefined serving cell quality criterion for receiving at a mobile station wanted signals from a base station operating the serving radio cell. The at least one serving cell feedback parameter may be for example at least one of the following: an indication for the serving cell pre-coding vector, a corresponding serving cell channel quality indicator, a corresponding serving cell rank indicator, an interference hypothesis, that all interfering radio cells belong to a CoMP cluster are switched off (i.e. are not transmitting any radio frequency signals).

The predefined serving cell quality criterion may be for example a serving cell pre-coding vector which provides a largest serving cell CQI value or at least two serving cell pre-coding vectors which provide largest serving cell CQI values.

The method for reporting the channel feedback even further contains determining for the at least one neighboring radio cell based on the received neighboring pilot signals at least one neighboring cell feedback parameter that maximizes a predefined neighboring cell quality criterion for receiving at the mobile station interference signals from a base station operating the at least one neighboring radio cell with a constraint that serving channel receive weights as determined for the serving radio cell using the predefined serving cell quality criterion are applied as fixed receive weights for a determination of the at least one neighboring cell feedback parameter. The at least one neighboring cell feedback parameter may be for example an indication for the neighboring cell pre-coding vector, a corresponding neighboring cell channel quality indicator and a corresponding neighboring cell rank indicator. The predefined neighboring cell quality criterion may be for example a neighboring cell pre-coding vector which provides a largest neighboring cell CQI value by using the same serving channel receive weights as used for selecting the serving cell pre-coding vector or to select at least two neighboring cell pre-coding vectors which provide largest neighboring cell CQI values by using the same serving channel receive weights as used for selecting the serving cell pre-coding vectors.

The method for reporting the channel feedback even further contains transmitting serving cell feedback information about the at least one serving cell feedback parameter and neighboring cell feedback information about the at least one neighboring cell feedback parameter.

The objects are further achieved by a method for determining a set of mobile stations to be scheduled in a radio communication system. The method for determining the set of mobile stations contains receiving from at least two mobile stations serving cell feedback information about at least one serving cell feedback parameter that is determined in each case by one of the at least two mobile stations based on received serving cell pilot signals and that maximizes a predefined serving cell quality criterion for receiving at the one of the at least two mobile stations wanted signals from a base station operating the serving radio cell. The method for determining the set of mobile stations further contains receiving from the at least two mobile stations neighboring cell feedback information about at least one neighboring cell feedback parameter that is determined in each case by the one of the at least two mobile stations based on received neighboring cell pilot signals and that maximizes a predefined neighboring cell quality criterion for receiving at the one of the at least two mobile stations interference signals from a base station operating the at least one neighboring radio cell with a constraint that serving channel receive weights as determined for the serving radio cell using the predefined serving cell quality criterion are applied as fixed receive weights for a determination of the at least one neighboring cell feedback parameter. The method for determining the set of mobile stations further contains determining based on the at least one serving cell feedback parameter and based on the at least one neighboring cell feedback parameter the set of mobile stations that maximizes a predefined scheduler criterion. The predefined scheduler criterion may be for example a predicted weighted sum data rate of the mobile stations of the set of mobile stations.

The objects are even further achieved by a computer program having a program code for performing either the method for reporting the channel feedback or the method for determining the set of mobile stations, when the computer program is executed on at least one computer or at least one processor.

The objects are even further achieved by a mobile station for reporting channel feedback in a radio communication system. The mobile station contains at least one receiver apparatus which is configured to receive serving cell pilot signals of a serving radio cell and neighboring cell pilot signals of at least one neighboring radio cell of the serving radio cell. The mobile station further contains at least one processor which is configured to determine for the serving radio cell based on the received serving cell pilot signals at least one serving cell feedback parameter that maximizes a predefined serving cell quality criterion for receiving at the mobile station wanted signals from a base station operating the serving radio cell and which is further configured to determine for the at least one neighboring radio cell based on the received neighboring pilot signals at least one neighboring cell feedback parameter that maximizes a predefined neighboring cell quality criterion for receiving at the mobile station interference signals from a base station operating the at least one neighboring radio cell with a constraint that serving channel receive weights as determined for the serving radio cell using the predefined serving cell quality criterion are applied as fixed receive weights for a determination of the at least one neighboring cell feedback parameter. The mobile station even further contains at least one transmitter apparatus which is configured to transmit serving cell feedback information about the at least one serving cell feedback parameter and neighboring cell feedback information about the at least one neighboring cell feedback parameter.

The objects are even further achieved by a scheduler apparatus for determining a set of mobile stations to be scheduled in a radio communication system. The scheduler apparatus contains at least one receiver apparatus which is configured to receive from at least two mobile stations serving cell feedback information about at least one serving cell feedback parameter that is determined in each case by one of the at least two mobile stations based on received serving cell pilot signals and that maximizes a predefined serving cell quality criterion for receiving at the one of the at least two mobile stations wanted signals from a base station operating the serving radio cell and which is further configured to receive from the at least two mobile stations neighboring cell feedback information about at least one neighboring cell feedback parameter that is determined in each case by the one of the at least two mobile stations based on received neighboring cell pilot signals and that fulfills a predefined neighboring cell quality criterion for receiving at the one of the at least two mobile stations interference signals from a base station operating the at least one neighboring radio cell with a constraint that serving channel receive weights as determined for the serving radio cell using the predefined serving cell quality criterion are applied as fixed receive weights for a determination of the at least one neighboring cell feedback parameter. The scheduler apparatus further contains at least one processor which is configured to determine based on the at least one serving cell feedback parameter and based on the at least one neighboring cell feedback parameter the set of mobile stations that maximizes a predefined scheduler criterion.

The methods, the computer program, the mobile station and the scheduler apparatus as described above provide an optimization for coordinated scheduling coordinated beamforming and in particular provide an optimized selection of a set of mobile stations for coordinated scheduling coordinated beamforming. The above mentioned technical features allow to add a CQI reporting option which instructs a mobile station to report best PMI and CQI of neighboring radio cells not only using receive weights which are optimized to a reception of interference signals from the respectively reported neighboring radio cell for determining an equivalent channel which is suitable for dynamic point selection and handover, as it is currently specified in LTE Release 11 (LTE = Long Term Evolution), but to alternatively enable the mobile station to use receive weights optimized for reception of the serving cell also for determining an equivalent channel which is suitable for downlink coordinated scheduling coordinated beamforming.

According to a preferred embodiment, the determining of the at least one serving cell feedback parameter contains determining at least one combination of a serving cell pre-coding vector and of the serving channel receive weights that maximizes the predefined serving cell quality criterion and the determining of the at least one neighboring cell feedback parameter contains determining at least one combination of a neighboring cell pre-coding vector and of the serving channel receive weights that maximizes the predefined neighboring cell quality criterion.

In a further preferred embodiment, the determining of the at least one serving cell feedback parameter contains determining a serving cell signal-to-interference-and-noise ratio $SINR_{n,k}$ and a channel quality identifier $CQI_{n,k}$ of the mobile station for a transmission channel from the serving radio cell to the mobile station according to equations

$$SINR_{n,k} = \frac{S_{n,k}}{I_k + N'}, CQI_{n,k} = f^{-1}\left(SINR_{n,k}\right)$$ with $k$ being an index and identifier for the mobile station,

$n$ being an index and identifier for the serving radio cell, $S_{n,k}$ being a signal strength value measured by the mobile station for wanted signals received via a transmission channel from the serving radio cell to the mobile station, $I_k$ being an interference strength value of an out of cluster interference measured by the mobile station and $N$ being a noise strength value for thermal noise. The out of cluster interference can be measured for example on time and/or frequency radio resources which are switched off periodically in radio cells of the CoMP cluster for a predefined time period for enabling a measurement of the out of cluster interference by mobile stations which are located in one of the radio cells of the CoMP cluster. The measurement of the out of cluster interference is available for example in radio communication systems and mobile stations which are operated according to the LTE Release 11 specification.

According to the preferred embodiment, the determining of the at least one neighboring cell feedback parameter contains determining at least one neighboring cell signal-to-interference-and-noise ratio $SINR_{m,k}$ and a channel quality identifier $CQI_{m,k}$ of the mobile station for at least one further transmission channel from the at least one neighboring radio cell to the mobile station according to equations $SINR_{m,k} = \frac{I_{m,k}}{I_k + N}, CQI_{m,k} = f^{-1}\left(SINR_{m,k}\right)$

with $m$ being an identifier for the at least one neighboring radio cell and $I_{m,k}$ being an interference strength value measured by the mobile station for interference signals received via the at least one transmission channel from the at least one neighboring radio cell to the mobile station.

In an alternative embodiment the determining of the at least one serving cell feedback parameter and the determining of the at least one neighboring cell feedback parameter contains determining a channel quality identifier

$CQI_{m,n,k}$ according to equation $CQI_{m,n,k} = f^{-1}\left(\frac{I_{m,k}}{S_{n,k}}\right)$.

In an even further preferred embodiment, the at least one serving cell feedback parameter and the at least one neighboring cell feedback parameter are determined for coordinated scheduling coordinated beamforming as a first use case and the method further contains receiving an indication to determine the at least one serving cell feedback parameter and the at least one neighboring cell feedback parameter for the first use case or to determine cell feedback parameters for a second use case. Preferably, the second use case may be fast cell switching or joint transmission or dynamic point blanking.

In a first embodiment, the method for reporting the channel feedback further contains for the fast cell switching a step of determining at least one serving cell fast cell switching feedback parameter in a same way as for the at least one serving cell feedback parameter that maximizes the predefined serving cell quality criterion as described above, a further step of determining at least one neighboring cell fast cell switching feedback parameter independent from the serving channel receive weights that maximizes the predefined neighboring cell quality criterion and an even further step of transmitting serving cell fast cell switching feedback information about the at least one serving cell fast cell switching feedback parameter and neighboring cell fast cell switching feedback information about the at least one neighboring cell fast cell switching feedback parameter.

In a second embodiment, the method for reporting the channel feedback further contains for the joint transmission a step of determining at least one joint transmission feedback parameter for each of at least two radio cells of a cooperative multipoint cluster that maximizes a predefined joint transmission criterion and a further step of transmitting joint transmission feedback information about the joint transmission feedback parameters. The predefined joint transmission criterion may be for example an SINR value of an overall signal received at the mobile station by assuming a transmission of same wanted signal at a same time from candidate radio cells which belong to the CoMP cluster. The wanted signals are assumed to be transmitted by an overall pre-coding vector. This allows determining an equivalent channel suitable for downlink joint transmission at the mobile station.

In a third embodiment, for the dynamic point blanking the at least one serving cell feedback parameter and the at least one neighboring cell feedback parameter are determined as mentioned above for the first use case and the serving cell feedback information and the neighboring cell feedback information are transmitted as mentioned above for the first use case. Alternatively, the method for reporting the channel feedback further contains for the dynamic point blanking determining based on the received neighboring cell pilot signals at least one dynamic point blanking feedback parameter for at least one neighboring radio cell of a cooperative multipoint cluster that describes an averaged interference level for a sub-frequency bandwidth of an overall frequency bandwidth of the at least one neighboring radio cell or for the overall frequency bandwidth of the at least one neighboring radio cell with the constraint that the serving channel receive weights are applied as the fixed receive weights for a determination of the at least one dynamic point blanking feedback parameter and transmitting dynamic point blanking feedback information about the at least one dynamic point blanking feedback parameter. The overall frequency bandwidth is a bandwidth of the electromagnetic spectrum used by the at least one neighboring radio cell for transmitting wanted signals to corresponding mobile stations.

In a preferred embodiment, the determining of the set of mobile stations determines the set of mobile stations by applying a Greedy algorithm.

According to a further preferred embodiment, the determining of the set of mobile stations contains determining interference strength values $I_{m,k}$ according to equation $I_{m,k} = \dfrac{f(CQI_{m,k})}{f(CQI_{n,k})}$ with $m$ being an identifier for the at least one neighboring radio cell, $k$ being an index and identifier for the one of the at least two mobile stations located in the serving radio cell, $n$ being an index and identifier for the serving radio cell, $f(CQI_{n,k})$ being a function for a channel quality identifier $CQI_{n,k}$ of the one of said at least two mobile stations for a transmission channel from the serving radio cell to the one of the at least two mobile stations and $f(CQI_{m,k})$ being a function for a channel quality identifier $CQI_{m,k}$ of the one of the at least two mobile stations for at least one further transmission channel from the at least one neighboring radio cell to the one of the at least two mobile stations. The determining of the set of mobile stations further contains determining further interference strength values $I_{m,k,l}$ for the one of the at least two mobile stations when at least one further of the at least two mobile stations is scheduled by the at least one neighboring radio cell according to equation $I_{m,k,l} = W_{m,k}^{H} W_{m,l} I_{m,k}$ with $l$ being an index and identifier for the at least one further of the at least two mobile stations located in the at least one neighboring radio cell, $W_{m,k}^{H}$ being a vector for an equivalent multiple input single output channel for a transmission channel from the at least one neighboring radio cell to the one of the at least two mobile stations and $W_{m,l}$ being a pre-coding vector assumed for serving the at least one further of the at least two mobile stations by the at least one neighboring radio cell. The concept of equivalent multiple input single output channels may be alternatively applied for so-called multiple layer transmissions. In such a case a corresponding pre-coding vector would describe an equivalent multiple input multiple output channel. However, each one of the multiple layer transmissions can be seen as a transmission via a corresponding multiple input single output channel. Preferably, the determining of the interference strength values $I_{m,k}$ assumes a signal strength value $S_{n,k}$ for receiving wanted signals at the one of the at least two mobile stations from the serving radio cell in equation $SINR_{n,k} = \dfrac{S_{n,k}}{I_k + N} = f(CQI_{n,k})$ being normalized to one with $SINR_{n,k}$ being a serving cell signal-to-interference-and-noise ratio for the wanted signals received at the one of the at least two mobile stations from the serving radio cell, $I_k$ being an out of cluster interference strength value measured by the one of the at least two mobile stations and N being a noise strength value for a reception of thermal noise.

Preferably, the equivalent multiple input single output channel corresponds to a product of the serving channel receive weights $g_{n,k}$ of the one of the at least two mobile stations for a reception of signals transmitted from the at least one neighboring radio cell and of a transmission channel matrix $H_{m,k}$ describing a transmission of the signals from the at least one neighboring radio cell to antenna elements of the one of the at least two mobile stations.

According to a first alternative embodiment, the determining of the set of mobile stations is only based on pre-coding vectors as indicated by the serving cell feedback information and the neighboring cell feedback information.

In a second alternative embodiment, the method for determining the set of mobile stations further contains determining at least two preliminary sets of mobile stations and the determining of the set of mobile stations determines a final set of mobile stations by applying an optimization algorithm based on the determined at least two preliminary sets of mobile stations further based on at least one serving cell pre-coding vector not indicated by the serving cell feedback information. Preferably the optimization algorithm may be zero forcing or signal to leakage plus noise ratio optimization.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram of six radio cells, of two base stations and of a scheduling apparatus of a radio communication system and of five mobile stations each located in one of the six radio cells according to an exemplarily embodiment of the invention.

Figure 2 shows schematically a flow diagram of a method for reporting channel feedback in a radio communication system according to an exemplarily embodiment of the invention.

Figure 3 shows schematically a flow diagram of a method for determining a set of mobile stations to be scheduled in a radio communication system according to an exemplarily embodiment of the invention.

Figure 4 shows schematically via two mobile stations, via antenna elements of the mobile stations and via antenna elements of two radio cells a relation between transmission channels, equivalent channels and an interference channel according to an exemplarily embodiment of the invention.

Figure 5 shows schematically a flow diagram of steps for selecting the set of mobile stations by applying a Greedy algorithm according to an exemplarily embodiment of the invention.

Figure 6 shows schematically a block diagram of a mobile station which is configured to report channel feedback in a radio communication system according to an exemplarily embodiment of the invention.

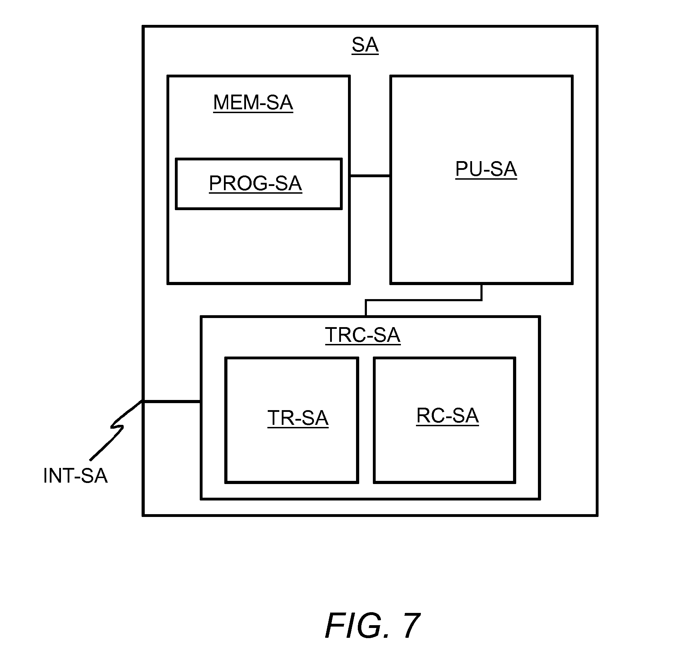

Figure 7 shows schematically a block diagram of a scheduling apparatus which is configured to determine a set of mobile stations to be scheduled in a radio communication system according to an exemplarily embodiment of the invention.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

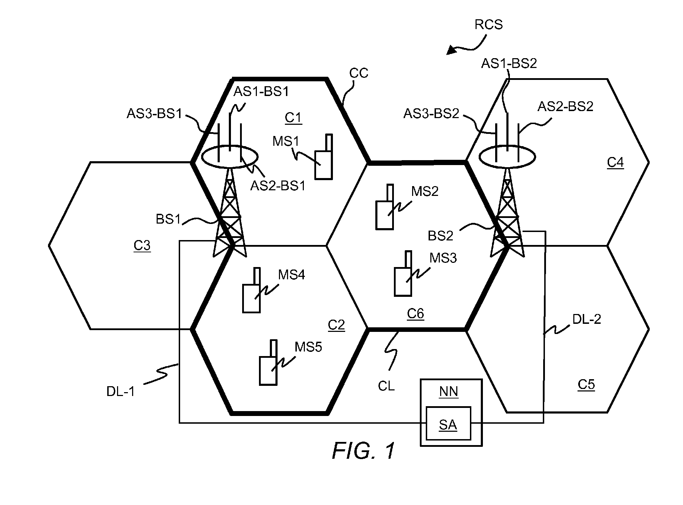

Figure 1 shows schematically a block diagram of six radio cells C1, ..., C6, of two base stations BS1, BS2 and of a scheduling apparatus SA of a radio communication system RCS. The block diagram also shows five mobile stations MS1, ..., MS5 which are each located in one of the six radio cells C1, ..., C6. Further radio cells, further base stations, further scheduling apparatuses and further network nodes of the radio communication system RCS.

The communication system CS may be for example a radio communication system based on a wireless communication technique such as WLAN (WLAN = Wireless Local Area Network) as being defined by one of the IEEE 802.11 standards (IEEE = Institute of Electrical and Electronics Engineers), WiMAX (WiMAX = Worldwide Interoperability for Microwave Access) as being ratified by the WiMAX Forum, EVDO (EVDO = Enhanced Voice-Data Optimized or Enhanced Voice-Data Only) as being standardized by 3GPP2 (3GPP2 = 3rd Generation Partnership Project 2), or UMTS/HSPA (HSPA = High Speed Packet Access), LTE (LTE = Long Term Evolution), LTE Advanced or 5G (5G = Fifth Generation) as being defined by 3GPP.

The term "radio cell" may be considered synonymous to and/or referred to as radio cell, cell, radio sector, sector etc. The radio cells C1, ..., C6 as shown in Figure 1 are exemplarily sketched in a form of hexagons for simplification without limiting the invention to such form of the radio cells C1, ..., C6.

The term "base station" may be considered synonymous to and/or referred to as a base transceiver station, access point base station, access point, macro base station, femto base station, pico base station etc. and may describe equipment that provides wireless connectivity via one or more radio links to one or more mobile stations.

The term "macro base station" may be considered synonymous to and/or referred to a base station, which provides a radio cell having a size in a range of several hundred meters up to several kilometres. A macro base station usually has a maximum output power of typically tens of watts. The term "macro radio cell" may be considered synonymous to and/or referred to a radio cell, which provides the widest range of all radio cell sizes. Macro cells are usually found in rural areas or along highways.

The term "pico base station" may be considered synonymous to and/or referred to a small cellular base station typically covering a small area so-called pico cell, such as in-building (offices, shopping malls, train stations, stock exchanges, etc.), or more recently in-aircraft. In cellular networks, pico cells are typically used to extend coverage to indoor areas where outdoor signals do not reach well, or to add network capacity in areas with very dense phone usage, such as train stations.

The term "femto base station" may be considered synonymous to and/or referred to a small, low-power cellular base station, typically designed for use in a home or small business. A broader term which is more widespread in the industry is small cell, with femto cell as a subset.

The term "mobile station" may be considered synonymous to, and may hereafter be occasionally referred to, as a mobile unit, mobile user, access terminal, a UE (UE = user equipment), a subscriber, a user, a cellular telephone, a smart phone, a portable computer, a pocket computer, a hand-held computer, a PDA (PDA = Personal Digital Assistant), a USB stick (USB = Universal Serial Bus), a smart watch, a sensor such as a sensor for meteorological data, an RFID tag, a head mounted display such as a Google glass or a car-mounted mobile device such as a repeater or relay.

The term "repeater" may be considered synonymous to and/or referred to as an electronic device that receives a signal and simply retransmits it at a higher level or higher power, or onto another side of an obstruction, so that the signal can cover longer distances.

The term "relay" may be considered synonymous to and/or referred to as an electronic radio communication device that receives a signal and retransmits a different signal not only at a higher level or higher power, but also at a different frequency and/or different time slot and/or spreading code, to increase capacity in a wireless access network and to improve wireless link performance.

A first base station BS1 exemplarily contains three antenna systems AS1-BS1, AS2-BS1, AS3-BS1 and is configured to operate radio cells C1, C2, C3. In a clockwise manner a first antenna system AS1-BS1 of the first base station BS1 is configured to serve a first radio cell C1, a second antenna system AS2-BS1 of the first base station BS1 is configured to serve a second radio cell C2 and a third antenna system AS3-BS1 of the first base station BS1 is configured to serve a third radio cell C3. In a same way, a second base station BS2 exemplarily also contains three antenna systems AS1-BS2, AS2-BS2, AS3-BS2 and is configured to operate radio cells C4, C5, C6. In a clockwise manner a first antenna system AS1-BS2 of the second base station BS2 is configured to serve a fourth radio cell C4, a second antenna system AS2-BS2 of the second base station BS2 is configured to serve a fifth radio cell C5 and a third antenna system AS3-BS2 of the second base station BS2 is configured to serve a sixth radio cell C6.

The first base station BS1 is connected via a first data link DL-1 to the scheduling apparatus SA and the second base station BS2 is connected via a second data link DL-2 to the scheduling apparatus SA. The data links DL-1, DL-2 may apply for example an optical transmission technique via optical fibers or an electrical transmission technique via coaxial cables known to skilled persons in the art.

The scheduling apparatus SA may be located in a network node NN which is separated from the first base station BS1 and the second base station BS2 as shown in Figure 1. Alternatively, the scheduling apparatus SA may be co-located with either the first base station BS1 or the second base station BS2, may be part of the first base station BS2 or may be part of the second base station BS2.

The scheduling apparatus SA may have configured the base stations BS1, BS2 in such a way, that the first radio cell C1, the second radio cell C2 and the sixth radio cell C6 form a CoMP cluster CC. The base stations BS1, BS2 may be further configured by the scheduling apparatus SA or by a further scheduling apparatus in such a way, that the third radio cell C3 may be part of a further CoMP cluster and the radio cells C4, C5 may be part of an even further CoMP cluster which are both not shown in Figure 1 for simplification.

Exemplarily, a first mobile station MS1 is located within a coverage area of the first radio cell C1, a second mobile station MS2 and a third mobile station MS3 are located within a coverage area of the sixth radio cell C6, and a fourth mobile station MS4 and a fifth mobile station MS5 are located within a coverage area of the second radio cell C2. This means, only mobile stations which are located in one of the radio cells of the CoMP cluster CC are shown for simplification.

The base stations BS1, BS2 are configured to transmit pilot signals across the radio cells C1, ..., C6 via the antenna systems AS1-BS1, AS2-BS1, AS3-BS1, AS1-BS2, AS2-BS2, AS3-BS2. The mobile stations MS1, ..., MS5 are configured to receive the pilot signals.

The first mobile station MS1 may be served by the first base station BS1 via the first radio cell C1 which means that the first radio cell C1 is a serving radio cell for the first mobile station MS1. In such a case, the first mobile station MS1 may be configured to receive pilot signals of the first radio cell C1 as serving cell pilot signals, further pilot signals of the second radio cell C2 as neighboring cell pilot signals and even further pilot signals of the sixth radio cell C6 as further neighboring cell pilot signals.

The first mobile station MS1 is further configured to determine based on the received serving cell pilot signals at least one serving cell feedback parameter for the serving radio cell C1 by determining at least one combination of a serving cell pre-coding vector and of serving channel receive weights that maximizes a predefined serving cell quality criterion for receiving wanted signals at the first mobile station MS1 from the first base station BS1.

The first mobile station MS1 is further configured to determine based on the neighboring cell pilot signals received from the second radio cell C2 at least one neighboring cell feedback parameter by determining at least one combination of a neighboring cell pre-coding vector and of the above mentioned serving channel receive weights that maximizes a predefined neighboring cell quality criterion for receiving interference signals at the first mobile station MS1 from the first base station BS1.

When the at least one serving cell feedback parameter and the at least one neighboring cell feedback parameter have been determined, the first mobile station MS1 transmits serving cell feedback information about the at least one serving cell feedback parameter and neighboring cell feedback information about the at least one neighboring cell feedback parameter to the first base station BS1 which forwards the at least one serving cell feedback parameter and the at least one neighboring cell feedback parameter to the network node NN which provides the at least one serving cell feedback parameter and the at least one neighboring cell feedback parameter to the scheduler apparatus SA. The serving cell feedback information and the neighboring cell feedback information may be transmitted by a single report or by separate reports.

The further mobile stations MS2, ..., MS5 may be configured to operate in a same way as the first mobile station MS1 which means that the further mobile stations MS2, ..., MS5 also receive serving cell pilot signals and neighboring cell pilot signals from corresponding base stations, determine further serving cell feedback parameters based on the serving cell pilot signals and further neighboring cell feedback parameters based on the neighboring cell pilot signals and transmit the further serving cell feedback parameters and the further neighboring cell feedback parameters to corresponding base stations which forward the report or the further serving cell feedback parameters and the further neighboring cell feedback parameters to the network node NN or to a further network node which also contains a scheduler apparatus.

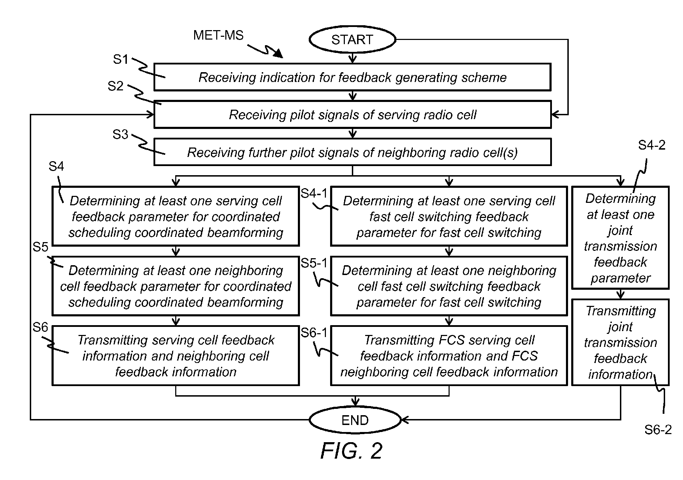

More information about the determination of the at least one serving cell feedback parameter and the determination of the at least one neighboring cell feedback parameter is given in the following description with respect to Figure 2.

The scheduler apparatus SA receives via the base stations BS1, BS2 the serving cell feedback information and the neighboring cell feedback information from the mobile stations MS1, ..., MS5. Based on the at least one serving cell feedback parameters and the at least one neighboring cell feedback parameter from each of the mobile stations MS1, ..., MS5, the scheduler apparatus determines a set of mobile stations that maximizes a predefined scheduler criterion by selecting corresponding mobile stations from the mobile stations MS1, ..., MS5 which are located in radio cells C1, C2, C6 of the CoMP cluster CC.

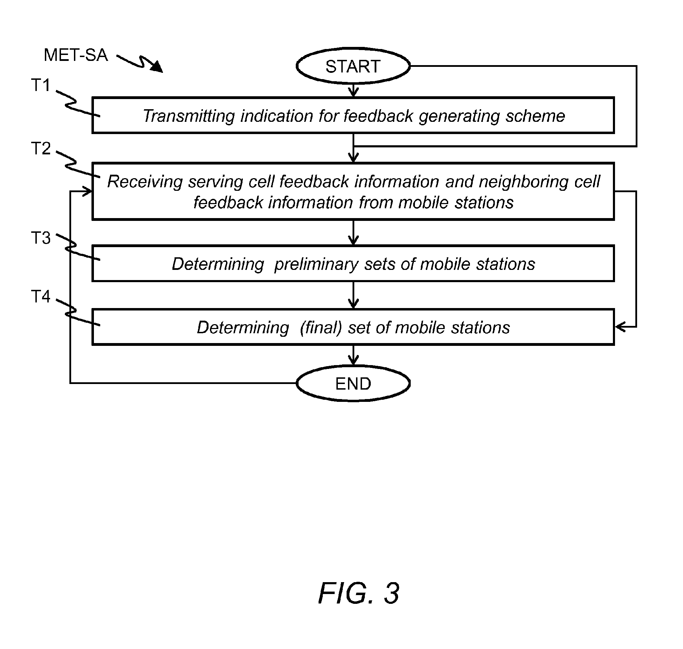

More information about the determination of the set of mobile stations is given in the following description with respect to Figures 3 to 5.

Figure 2 shows schematically a flow diagram of a method MET-MS for reporting channel feedback in the radio communication system RCS which is shown in Figure 1. The method MET-MS may be executed by each one of the mobile stations MS1, ..., MS5. Alternatively, the method MET-MS may be only executed by those mobile stations which are configured with the technical features as described in this specification.

In a first optional step S1, an indication is received from the scheduler apparatus SA or from one of the base stations BS1, BS2 which indicates a feedback generating scheme to be used in the following. The feedback generating scheme may be applied until a new indication for another feedback generating scheme is received.

Following use cases may be applicable in the CoMP cluster CC of the radio communication system RCS:

- Coordinated Scheduling Coordinated Beamforming (CS/CB): Multiple coordinated TPs (TP = transmission point) share CSI (CSI = Channel State Information) for multiple mobile stations and a data packet that is destined to a specific mobile station is available only at one TP. A TP is a system which contains a baseband processing unit, an analogue RF processing unit (RF = Radio Frequency) and one of the antenna systems AS1-BS1, AS2-BS1, AS3-BS2. In CB (CB = Coordinated Beamforming), a power level and beamforming coefficients are calculated to achieve some common SINRs in the radio communication system RCS or to maximize an SNIR. In CS (Coordinated Scheduling), the radio communication system RCS is divided into multiple CoMP clusters and applies a centralized scheduling within each cluster by one of the scheduler apparatuses SA in order to determine which TPs in the CoMP cluster CC should transmit in each time slot and to which one of the mobile stations MS1, ..., MS5. CS/CB is a technology that jointly uses CB and CS.

- Fast Cell Switching (FCS): In a wireless cellular communications system which uses forward link (from a base station to a remote, e.g. mobile terminal) rate adaptation and fast scheduling for packet data services for which the packet data traffic is relatively insensitive to delay, it has been proposed to use fast cell/sector switching to replace or supplement soft handoff.

- Joint Transmission (JT): Multiple TPs are transmitting same data packets with appropriate beamforming weights of a pre-coding vector to one or several of the mobile stations MS1, ..., MS5. If required, the multiple TPs are operated with timing offsets for obtaining a same point in time, when the data packets are received at the one or the several of the mobile stations MS1, ..., MS5. This allows a coherent superposition at the one or the several of the mobile stations MS1, ..., MS5.

- Dynamic Point Blanking (DPB): DPB is introduced to reduce the interference from a strongest coordinated neighboring radio cell by power control. For example, when CoMP measurement set size is 2 and a selected CoMP measurement set for the first mobile station MS1 is the first radio cell C1 (serving cell) and the second radio cell C2 (non-serving cell) by radio resource management measurement. If CS/DPB is used, the first radio cell C1 may transmit data on a RB (RB = Resource Block) to the first mobile station MS1 and the second radio cell C2 may configure zero power on the same RB, when a weighted sum data rate is larger and a system performance improves in comparison to a case, when on the same RB no zero power is configured. Thus, the interference from the second radio cell C2 will be reduced. DPB can also be used with DPS (DPS = Dynamic Point Selection) together. DPS means that the scheduler apparatus SA can dynamically select the TP to transmit data to the first mobile station MS1 in each subframe. For example, in a first subframe, the scheduler apparatus SA can select the first radio cell C1 to transmit first data by a first RB to the first mobile station MS1 and mute the first RB in the second radio cell C2. And in a second subframe, the scheduler apparatus SA can select the second radio cell C2 to transmit second data by a second RB to the first mobile station MS1 and mute the second RB in the first radio cell C1 according to the channel state information feedback from the first mobile station MS1.

Following feedback generating schemes may be applied for the above mentioned use cases:

- First feedback generating scheme for CS/CB: Feedback parameters for neighboring radio cells and regarded as interfering radio cells are determined with a constraint that serving channel receive weights as determined for the serving radio cell using the predefined serving cell quality criterion may be applied as fixed receive weights for the neighboring radio cells.

- Second feedback generating scheme for FCS: Feedback parameters for the serving radio cell and further feedback parameters for the neighboring radio cells are determined independent from each other. In such a case the neighboring radio cells are regarded as potential target radio cells for a handover procedure. In case of FCS an interference value $I_k$ as described in following paragraphs and determined by one of the mobile stations MS1, ..., MS5 corresponds to a total interference of the radio communication system RCS including intra-cluster interference by radio cell belonging to the CoMP cluster CC and out of cluster interference by radio cells not belonging to the CoMP cluster CC. Note, that in case of determining feedback for one of the neighboring radio cells, the serving cell pilot signals are regarded as interference signals.

- Third feedback generating scheme for JT: Feedback parameters for the serving radio cell and further feedback parameters for the neighboring radio cells which are regarded as potential cooperative radio cells are determined in dependency from each other by seeking receive weights which optimize a combined reception of wanted signals transmitted from the serving radio cell being part of the CoMP cluster CC and of further wanted signals transmitted from at least one of the neighboring radio cells being part of the CoMP cluster CC.

- Fourth feedback generation scheme for DPB: The at least one serving cell feedback parameter and the at least one neighboring cell feedback parameter are determined and reported in a same way as described above for the first feedback generation scheme. Alternatively, for at least one neighboring radio cell of the CoMP cluster CC an averaged interference level or a path loss for a sub-frequency bandwidth of an overall frequency bandwidth of the at least one neighboring radio cell or for the overall frequency bandwidth of the at least one neighboring radio cell may be determined based on the received neighboring cell pilot signals with the constraint that - in a same way as for the first feedback generation scheme - the serving channel receive weights are applied as the fixed receive weights for a determination of the averaged interference level or the path loss. The averaged interference level and/or the path loss are transmitted as at least one dynamic point blanking feedback parameter of a dynamic point blanking feedback information.

In case of the above mentioned three use cases, the indication may be consist of two bits and the two bits set to "00" may indicate the first feedback generating scheme for CS/CB, the two bits set to "01" may indicate the second feedback generating scheme for FCS, the two bits set to "10" may indicate the third feedback generating scheme for JT and the two bits set to "11" may indicate the fourth feedback generating scheme for DPB.

In a further step S2, the serving cell pilot signals are received which are transmitted by a corresponding serving radio cell C1, C2, C6.

In a next step S3, the neighboring cell pilot signals are received which are transmitted by corresponding neighboring radio cells C1, ..., C6.

Dependant on the indicated coordination scheme (CS/CB, FCS, JT, DPB), the mobile stations MS1, ..., MS5 are configured to perform measurements for the received serving cell pilot signals and for the received neighboring cell pilot signals according to the corresponding feedback generation scheme as described above.

Next group of steps depends on whether the step S1 is executed or not executed and when the step S1 is executed which feedback generating scheme is indicated by the received indication. When step S1 may be not executed, the method MET-MS may start with step S2 and the first feedback generating scheme for CS/CB may be applied all the time. This means also that always a first group of steps S4, S5, S6 is executed and no second group of steps S4-1, S5-1, S6-1 and no third group of steps S4-2, S6-2.

When the steps S1 to S3 have been executed and the first feedback generating scheme for CS/CB was indicated by the step S1, the first group of steps S4, S5, S6 will be executed next.

In a further step S4, the at least one serving cell feedback parameter for CS/CB is determined. Preferably, the at least one serving cell feedback parameter is determined by determining at least one combination of a serving cell pre-coding vector and of the serving channel receive weights that maximizes the predefined serving cell quality criterion. The predefined serving cell quality criterion may be for example a serving cell pre-coding vector which provides a largest serving cell CQI value or at least two serving cell pre-coding vectors which provide largest serving cell CQI values.

By the step S4 a serving cell signal-to-interference-and-noise ratio $SINR_{n,k}$ and a channel quality identifier $CQI_{n,k}$ of the one of the mobile stations MS1, ..., MS5 for a transmission channel from the corresponding serving radio cell C1, C2, C6 to the one of the mobile stations MS1, ..., MS5 may be determined for example according to equations

$$SINR_{n,k} = \frac{S_{n,k}}{I_k+N}, CQI_{n,k} = f^{-1}\left(SINR_{n,k}\right) \qquad (1)$$

with:

- k being an index and identifier for one of the mobile stations MS1, ..., MS5, $n$ being an index and identifier for a corresponding serving radio cell C1, C2, C6,

- $S_{n,k}$ being a signal strength value measured by the one of the mobile stations MS1, ..., MS5 for wanted signals received from the corresponding serving radio cell C1, C2, C6 according to techniques known to skilled persons in the art,

- $I_k$ being a so-called out of cluster interference strength value measured by the one of the mobile stations MS1, ..., MS5 according to techniques known to skilled persons in the art, the out of cluster interference strength value $I_k$ does not contain the signal strength of the corresponding serving radio cell C1, C2, C6 and of corresponding interfering radio cells belonging to the CoMP cluster CC.

- N being a noise strength value for thermal noise measured by the one of the mobile stations MS1, ..., MS5 according to techniques known to skilled persons in the art.

The function for determining the channel quality identifier $CQI_{n,k}$ may be realized for example by a mapping table which contains intervals for SINR values in a first row and CQI values in a second row.

The at least one serving cell feedback parameter may be for example an indication for the selected serving cell pre-coding vector, a corresponding serving cell CQI value and in case of LTE a corresponding serving cell RI (RI = Rank Indicator) for a transmission layer in SU-MIMO (SU-MIMO = Single User Multiple Input Multiple Output).

In a next step S5, the at least one neighboring cell feedback parameter for CS/CB is determined. Preferably, the at least one neighboring cell feedback parameter is determined by determining at least one combination of a neighboring cell pre-coding vector and of the serving channel receive weights that maximizes the predefined neighboring cell quality criterion. The predefined neighboring cell quality criterion may be for example a neighboring cell pre-coding vector for each of the neighboring radio cells which provides a largest neighboring cell CQI value by using the same serving channel receive weights as used for determining the serving cell pre-coding vector or may be at least two neighboring cell pre-coding vectors which provide largest neighboring radio cell CQI values by using the same serving channel receive weights as used for determining the serving cell pre-coding vectors. In further alternatives, the predefined neighboring cell quality criterion may be for example a neighboring cell pre-coding vector only for those of the neighboring radio cells which provide a neighboring cell CQI value above a predefined value or which provide the three largest CQI values which means that only three CQI values from the strongest three neighboring radio cells are determined.

By the step S5 at least one neighboring cell signal-to-interference-and-noise ratio $SINR_{m,k}$ and a channel quality identifier of the one of the mobile stations MS1, ..., MS5 for at least one further transmission channel from the at least one neighboring radio cell C1, ..., C6 to the one of the mobile stations MS1, ..., MS5 may be determined according to equations

$$SINR_{m,k} = \frac{I_{m,k}}{I_k + N}, CQI_{m,k} = f^{-1}(SINR_{m,k}) \qquad (2)$$

with:

- $m$ being an identifier for the at least one neighboring radio cell C1, ..., C6,
- $I_{m,k}$ being an interference strength value measured by the one of the mobile stations MS1, ..., MS5 for the at least one transmission channel from the at least one neighboring radio cell C1, ..., C6 to the one of the mobile stations MS1, ..., MS5.

The function for determining the channel quality identifier $CQI_{m,k}$ may be realized for example by a further mapping table which contains intervals for SINR values in a first row and CQI values in a second row.

Alternatively, channel quality identifiers $CQI_{m,n,k}$ may be determined according to following equation:

$$CQI_{m,n,k} = f^{-1}\left(\frac{I_{m,k}}{S_{n,k}}\right) \qquad (3)$$

The at least one neighboring cell feedback parameter may be for example an indication for the selected neighboring cell pre-coding vector, a corresponding neighboring cell CQI value which has been determined for example according to equation (2) or according to equation (3) and in case of LTE a corresponding neighboring cell RI for a transmission layer in SU-MIMO.

In a further step S6, the serving cell feedback information which contains the at least one serving cell feedback parameter and the neighboring cell feedback information which contains the at least one neighboring cell feedback parameter are transmitted by a single report or by separate reports to a corresponding base station BS1, BS2 which forwards the single report or the separate reports to the network node NN which contains the scheduling apparatus SA.

When the steps S1 to S3 have been executed and the second feedback generating scheme for FCS was indicated by the step S1, the second group of steps S4-1, S5-1, S6-1 will be executed next.

In such a case in a further step S4-1, at least one serving cell fast cell switching feedback parameter may be determined in a same way as described above for the at least one serving cell feedback parameter of the first feedback generating scheme for CS/CB.

In a next step S5-1, at least one neighboring cell feedback parameter is determined independent from the serving channel receive weights which are determined in the previous step S4-1. This means, the constraint for the receive weights is not used and at least one combination of a neighboring cell pre-coding vector and of neighboring cell receive weights is determined by techniques known to skilled persons in the art which maximizes the above mentioned predefined neighboring cell quality criterion for receiving wanted signals from the at least one neighboring radio cell C1, ..., C6 at the one of the mobile stations MS1, ..., MS5.

In a further step S6-1, serving cell fast cell switching feedback information which contains the at least one serving cell fast cell switching feedback parameter and neighboring cell fast cell switching feedback information which contains the at least one neighboring cell feedback parameter are transmitted by a single report or by separate reports to a corresponding base station BS1, BS2 which forwards the single report or the separate reports to the network node NN which contains the scheduling apparatus SA.

When the steps S1 to S3 have been executed and the third feedback generating scheme for JT was indicated by the step S1, the third group of steps S4-2, S6-2 will be executed next.

In such a case in a further step S4-2, at least one joint transmission feedback parameter is determined by techniques known to skilled persons in the art for each of at least two radio cells of the CoMP cluster CC. Thereby, common joint transmission receive weights are determined for a common reception of wanted signals transmitted from the at least two radio cells of the CoMP cluster CC and pre-coding weights are determined for each of the at least two radio cells of the CoMP cluster CC that maximizes a predefined joint transmission criterion. The predefined joint transmission criterion may be for example an SINR value of an overall signal received at the one of the mobile stations MS1, ..., MS5 by assuming a transmission of single signals at a same time from candidate radio cells C1, C2, C6 which belong to the CoMP cluster CC.

In a next step S6-2, joint transmission feedback information which contains the joint transmission feedback parameters is transmitted to a corresponding base station BS1, BS2 which forwards the joint transmission feedback information to the network node NN which contains the scheduling apparatus SA.

For simplification, further steps for the fourth feedback generation scheme for DPB are not shown in Figure 2. In case of the fourth feedback generation scheme for DPB the at least one serving cell feedback parameter and the at least one neighboring cell feedback parameter may be determined as mentioned above for the first use case and the serving cell feedback information and the neighboring cell feedback information are transmitted as mentioned above for the first use case. Alternatively, the method for reporting the channel feedback for DPB may contain a step of determining based on the received neighboring cell pilot signals at least one dynamic point blanking feedback parameter for at least one neighboring radio cell of a cooperative multipoint cluster that describes an averaged interference level for a sub-frequency bandwidth of an overall frequency bandwidth of the at least one neighboring radio cell or for the overall frequency bandwidth of the at least one neighboring radio cell with the constraint that the serving channel receive weights are applied as the fixed receive weights for a determination of the at least one dynamic point blanking feedback parameter. The method for reporting the channel feedback for DPB may further contain a step of transmitting dynamic point blanking feedback information about the at least one dynamic point blanking feedback parameter. The overall frequency bandwidth is a bandwidth of the electromagnetic spectrum used by the at least one neighboring radio cell for transmitting wanted signals to corresponding mobile stations.

The steps S2 and S3 and either the first group of steps S4 to S6 or the second group of steps S4-1 to S6-1 or the third group of steps S4-2 to S6-2 or the further steps for the fourth feedback generation scheme for DPB of the method MET-MS may be preferably repeated by the one of the mobile stations MS1, ..., MS5 with a predefined time period such as 5 ms, 10 ms, 20 ms, 40 ms, 80 ms.

Figure 3 shows schematically a flow diagram of a method MET-SA for determining the set of mobile stations to be scheduled in the radio communication system RCS which is shown in Figure 1.

The method MET-SA may be executed by the scheduling apparatus SA which is shown in Figure 1.

In a first optional step T1, the indication for one of the feedback generating schemes according to one of the use cases is transmitted from the scheduling apparatus SA to one or several of the mobile stations MS1, ..., MS5. Alternatively, the step T1 may be executed by one of the base stations BS1, BS2.

When the step T1 is not executed, the method MET-SA starts with next step T2.

In the next step T2, the serving cell feedback information and the neighboring cell feedback information is received from two or more of the mobile stations MS1, ..., MS5.

Which step is executed as a further step depends on a configuration of the scheduler apparatus SA. The scheduler apparatus SA may be configured with a first configuration that only pre-coding vectors are used for the determination of the set of mobile stations which are indicated in the serving cell feedback information or the neighboring cell feedback information. When the scheduler apparatus SA is configured with the first configuration, step T4 may be executed as a next step.

Alternatively, the scheduler apparatus SA may be configured with a second configuration that the scheduler apparatus SA is allowed to modify the pre-coding vectors which are indicated in the serving cell feedback information. In such a case, the scheduler apparatus SA determines in step T3 at least two preliminary sets of mobile stations.

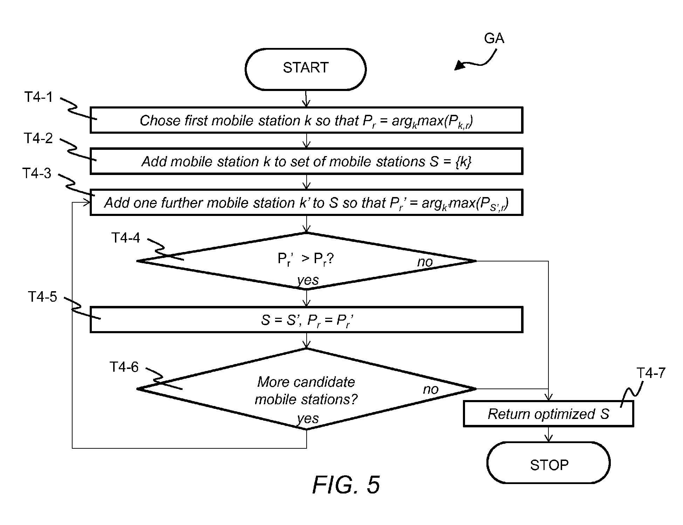

In the next step T4, the set of mobile stations is determined. In a first alternative, the determination of the set of mobile stations may be only based on the serving cell feedback information and the neighboring cell information as received by the at least two of the mobile stations MS1, ..., MS5 and as described in more detail with respect to Figure 5.

In a second alternative, the determination of the set of mobile stations may be further based on the at least two preliminary sets of mobile stations as determined by the step T3. In such a case, at least one of the serving cell pre-coding vectors as indicated in the serving cell feedback information of one of the mobile stations of the at least two preliminary sets of mobile stations is replaced by at least one serving cell pre-coding vector as defined by the scheduler apparatus SA. Then, an optimization algorithm known to skilled persons in the art is applied by the scheduler apparatus SA for determining a final set of mobile stations based on the determined at least two preliminary sets of mobile stations and further based on the defined at least one serving cell pre-coding vector which was not indicated by the serving cell feedback information. The optimization algorithm may be for example zero forcing or signal to leakage plus noise ratio optimization.

Preferably, in equation (1) as given above, it may be assumed that the signal strength value $S_{n,k}$ of one of the mobile stations MS1, ..., MS5 for wanted signals received via the transmission channel from one of the serving radio cells C1, C2, C6 to the one of the mobile stations MS1, ..., MS5 is normalized to one. In such a case interference strength values $I_{m,k}$ can be determined according to equation

$$I_{m,k} = \frac{f(CQI_{m,k})}{f(CQI_{n,k})}. \qquad (4)$$

A downlink transmission from one of the neighboring radio cell C1, ..., C6 with index $m$ to one of the mobile stations MS1, ..., MS5 with index $l$ may generated at a further one of the mobile stations MS1, ..., MS5 with index $k$ an interference strength values $I_{m,k,l}$ which may be determined for example according by equation

$$I_{m,k,l} = w_{m,k}^{H} w_{m,l} I_{m,k} \qquad (5)$$

with:

- $w_{m,k}^{H}$ being a 1x$S$ matrix for an equivalent multiple input single output channel for a transmission channel from the one of the neighboring radio cell C1, ..., C6 with index $m$ to the further one of the mobile stations MS1, ..., MS5 with index k,

- H being a Hermitian operator for a complex-conjugate transponse of a matrix with complex values,

- $S$ being a number of antenna elements of one of the antenna systems AS1-BS1, AS2-BS1, AS3-BS2,

- $W_{m,l}$ being a pre-coding vector assumed for serving the one of the mobile stations MS1, ..., MS5 with index $l$ by the one of the neighboring radio cells C1, ..., C6 with index $m$.

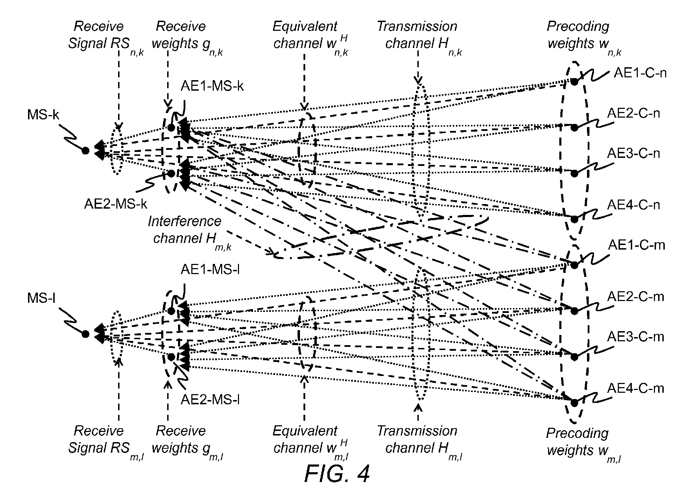

The concept of equivalent multiple input single output channels may be alternatively applied for so-called multiple layer transmissions. In such a case a corresponding pre-coding vector would describe an equivalent multiple input multiple output channel and instead of the 1x$S$ matrix a $ExS$ matrix with E being a number of parallel transmitted layers. However, each of the multiple layer transmissions can be seen as a transmission via a corresponding multiple input single output channel. For a better understanding, Figure 4 shows schematically a first mobile station MS-k with index $k$, a second mobile station MS-I with index $l$, antenna elements AE1-MS-k, AE2-MS-k of the first mobile station MS-k with index k, antenna elements AE1-MS-I, AE2-MS-I of the second mobile station MS-I with index $l$, antenna elements AE1-C-n, AE2-C-n, AE3-C-n, AE4-C-n of the serving radio cell C1, C2, C6 with index $n$, and antenna elements AE1-C-m, AE2-C-m, AE3-C-m, AE4-C-m of the one of the neighboring radio cell C1, ..., C6 with index $m$.

At the antenna elements AE1-MS-k, AE2-MS-k of the first mobile station MS-k with index k receive weights $g_{n,k}$ and at the antenna elements AE1-C-n, AE2-C-n, AE3-C-n, AE4-C-n of the serving radio cell C1, C2, C6 with index $n$ pre-coding weights $W_{n,k}$ are applied. Arrows with dotted lines are sketched from each one of the antenna elements AE1-C-n, AE2-C-n, AE3-C-n, AE4-C-n of the serving radio cell C1, C2, C6 with index $n$ to each one of the antenna elements AE1-MS-k, AE2-MS-k of the first mobile station MS-k with index $k$. These arrows represent a first transmission channel $H_{n,k}$. Further arrows with dotted lines are sketched from each one of the antenna elements AE1-MS-k, AE2-MS-k of the first mobile station MS-k with index $k$ to the first mobile station MS-k with index $k$. These further arrows represent a first receive signal $RS_{n,k}$. Even further arrows with dashed lines are sketched from each one of the antenna elements AE1-C-n, AE2-C-n, AE3-C-n, AE4-C-n of the serving radio cell C1, C2, C6 with index $n$ to the first mobile station MS-k with index k. These even further arrows represent a first equivalent multiple input single output channel

$$w_{n,k}^{H}.$$

A relation between the first equivalent multiple input single output channel $w_{n,k}^{H}$ and the first transmission channel $\boldsymbol{H_{n,k}}$ is given by following equation:

$$w_{n,k}^{H} = g_{n,k} \cdot \boldsymbol{H_{n,k}} \qquad (6)$$

In a same way, at the antenna elements AE1-MS-I, AE2-MS-I of the second mobile station MS-I with index *l* receive weights $g_{m,l}$ and at the antenna elements AE1-C-m, AE2-C-m, AE3-C-m, AE4-C-m of the one of the neighboring radio cell C1, ..., C6 with index *m* pre-coding weights $W_{m,l}$ are applied. Arrows with dotted lines are sketched from each one of the antenna elements AE1-C-m, AE2-C-m, AE3-C-m, AE4-C-m of the one of the neighboring radio cell C1, ..., C6 with index *m* to each one of the antenna elements AE1-MS-I, AE2-MS-I of the second mobile station MS-I with index *l*. These arrows represent a second transmission channel $\boldsymbol{H_{m,l}}$. Further arrows with dotted lines are sketched from each one of the antenna elements AE1-MS-I, AE2-MS-I of the second mobile station MS-I with index *l* to the second mobile station MS-I with index *l*. These further arrows represent a second receive signal $RS_{n,l}$. Even further arrows with dashed lines are sketched from each one of the antenna elements AE1-C-m, AE2-C-m, AE3-C-m, AE4-C-m of the one of the neighboring radio cell C1, ..., C6 with index *m* to the second mobile station MS-I with index k. These even further arrows represent a second equivalent multiple input single output channel $w_{m,l}^{H}$.

A relation between the second equivalent multiple input single output channel $w_{m,l}^{H}$ and the second transmission channel $\boldsymbol{H_{m,l}}$ may be given by following equation:

$$w_{m,l}^{H} = g_{m,l} \cdot \boldsymbol{H_{m,l}} \qquad (7)$$

In addition, arrows with dashed dotted lines are sketched from each one of the antenna elements AE1-C-m, AE2-C-m, AE3-C-m, AE4-C-m of the one of the neighboring radio cell C1, ..., C6 with index *m* to each one of the antenna elements AE1-MS-k, AE2-MS-k of the first mobile station MS-k with index *k*.

These arrows represent an interference transmission channel $\boldsymbol{H_{m,k}}$. The corresponding equivalent multiple input single output channel may be calculated for example according to following equation:

$$w_{m,k}^{H} = g_{n,k} \cdot \boldsymbol{H_{m,k}}. \qquad (8)$$

The corresponding equivalent multiple input single output channel may be obtained by optimizing the precoding vector $w_{m,k}^{H}$ of the interfering radio cell based on the optimized receive weights $g_{n,k}$ for the serving radio cell C1, C2, C3.

The step T4 for determining the set of mobile stations may be executed for example by applying a so-called Greedy algorithm GA which is sketched in Figure 5.

The Greedy algorithm GA may be based on following preconditions:

- Each one of the mobile stations MS1, ..., MS5 may have sent the serving cell feedback information which may be for example identical to feedback information as standardized for LTE. The serving cell feedback information contains the PMI, the CQI and the RI. A determination of the CQI may be based on a signal quality for a best fitting precoding vector and on an average interference which may include interference from all further radio cells in the radio communication system RCS. Thereby it may be assumed, that neighbor radio cells C1, ..., C6 may transmit or may not transmit wanted signals. Thereby it may optionally further considered, that the precoding applied by the neighbor radio cells C1, ..., C6 may be varied within a short time frame.
- The serving cell feedback information may further contain an interference hypothesis, that all interferering radio cells belong to the CoMP cluster CC are switched off (i.e. are not transmitting any radio frequency signals).
- Each one of the mobile stations MS1, ..., MS5 may have sent the neighboring cell feedback information which may contain for example an indication for one or several neighboring precoding vectors which fulfill the predefined neighboring cell quality criterion and an indication for a corresponding CQI value as determined for example by equation (2) or by equation (3).

In a first sub-step T4-1 for each mobile station a weighted data rate or priority $P_{k,r}^{(IH)}$ is determined by using for example following equation:

$$P_{k,r}^{(IH)} = R_{exp,k,r}^{(IH)} / R_{avg,k} \qquad (9)$$

with

$R_{exp,k,r}^{(IH)}$ being an expected data rate for the mobile station with index $k$ and for a radio resource with index $r$ and for a given interference hypothesis *IH,* and
$R_{avg,k}$ being an average data rate which the mobile station with the index $k$ has obtained until now.

According to a first alternative embodiment, a CQI feedback such as the LTE Release 8 CQI feedback or LTE Release 11 CQI feedback may be applied without any special interference hypothesis for determining the weighted data rates or priorities $P_{k,r}^{(IH)}$. According to a second alternative embodiment, the weighted data rates or priorities $P_{k,r}^{(IH)}$ may be determined based on a reasonable interference hypothesis. As an example the reasonable interference hypothesis may consider that some of the neighboring radio cells C1, ..., C6 will not transmit on the radio resource with the index $r$, e.g. because there is no pending transmission in these radio cells. For remaining neighboring radio cells, a worst case hypothesis may be used, namely that a worst companion pre-coding is applied which provides for example a largest interference.

In a further sub-step T4-2, the one of the mobile stations MS1, ..., MS5 for which a largest weighted data rate or priority $P_{k,r}^{(IH)}$ has been determined may be added to the set $S$ of mobile stations.

In a further subsequent sub-step T4-3 a further mobile station with index $k'$ may be added to the set $S$ of mobile stations, so that a sum $P_r'$ of the weighted data rates $P_{s',r}$ is optimized. After adding the further mobile station with index $k'$, the interference hypothesis for the respective neighboring radio cell and for the respective radio resource may be accurately calculated based on a knowledge of a transmission power applied at the respective neighboring radio cell and further based on applied one or several pre-coding vector(s). The corresponding interference from transmissions to already assigned mobile stations and received at candidate mobile stations may be calculated based on the equation (5).

In a next sub-step T4-4, it may be verified, whether a newly determined sum $P_r'$ of weighted rates is larger than a *sum $P_r$* of weighted rates which has been determined in a previous loop cycle. When the newly determined sum $P_r'$ of weighted rates is larger than the *sum $P_r$* of weighted rates, in a next sub-step T4-7 the final set of mobile stations may be returned for example to a main routine of the method MET-SA and the Greedy algorithm GA is stopped and the resulting set $S$ of mobile stations is used for co-scheduling the mobile stations of the set $S$ of mobile stations. When else the newly determined sum $P_r'$ of weighted rates is not larger than the sum $P_r$ of weighted rates, sub-step T4-5 may be a next sub-step.

By the next sub-step T4-5, the set $S'$ of mobile stations may be set equal to the set $S$ of mobile stations and the sum $P_r'$ of weighted rates may be set equal to the *sum $P_r$* of weighted rates.

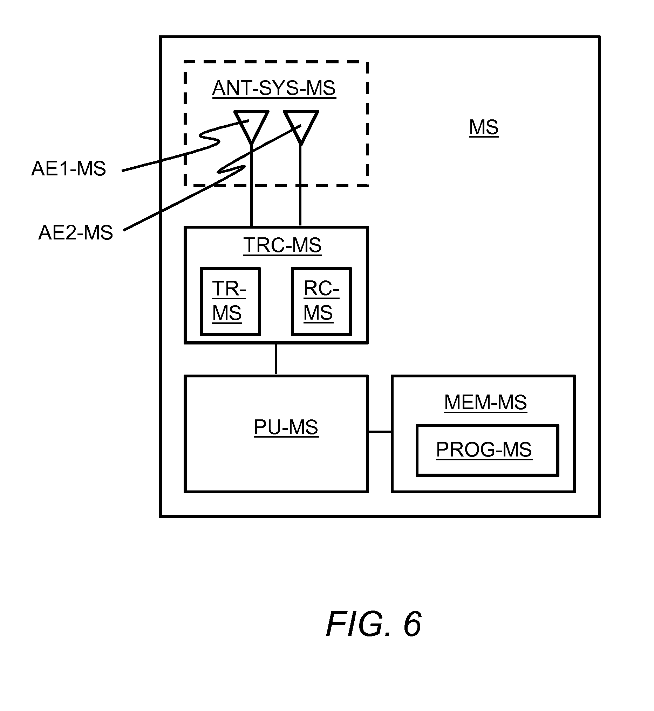

In a further sub-step T4-6, it may be verified whether further candidate mobile stations exist, which could be added to the set of mobile stations. When no such further candidate mobile station exists, the sub-step T4-7 may be a next sub-step. When else at least one further candidate mobile station exists, the sub-step T4-3 may be executed a further time.Figure 6 shows exemplarily a mobile station MS, which executes the method MET-MS (see Figure 2). The mobile station MS may be one of the mobile stations MS1, ..., MS5 as shown in Figure 1.

The mobile station MS contains an antenna system ANT-SYS-MS. The antenna system ANT-SYS-MS contains two antenna elements AE1-MS, AE2-MS. Alternatively, the antenna system ANT-SYS-MS may contain more than two antenna elements such as four antenna elements.

The mobile station MS further contains a transceiver TRC-MS which is connected to the antenna system ANT-SYS-MS. Alternatively, the mobile station MS contains two antenna systems and two transceivers and each one of the two transceivers is connected to one of the two antenna systems.

The transceiver TRC-MS contains a receiver apparatus TRC-MS and a transmitter apparatus TRC-MS. The receiver apparatus RC-MS is configured to receive the serving cell pilot signals of the serving radio cell C1, C2, C6 and the neighboring cell pilot signals of the at least one neighboring radio cell C1, ..., C6. The transmitter apparatus TR-MS is configured to transmit the serving cell feedback information and the neighboring cell feedback information. The receiver apparatus RC-MS may be further configured to receive the indication whether to determine the at least one serving cell feedback parameter and the at least one neighboring cell feedback parameter for the first use case or to determine cell feedback parameters for one of the further use cases.

The mobile station MS further contains a processing unit or processor PU-MS which is configured to execute the steps of the method MET-MS. Alternatively, the mobile station MS contains more than one processing unit or processor for executing the steps of the method MET-MS.

The processor PU-MS is configured to determine for the serving radio cell C1, C2, C6 based on the received serving cell pilot signals the at least one serving cell feedback parameter that maximizes the predefined serving cell quality criterion for receiving at the mobile station MS wanted signals from one of the base stations BS1, BS2 which operates the serving radio cell C1, C2, C6. The processor PU-MS is further configured to determine for the at least one neighboring radio cell C1, ..., C6 based on the received neighboring pilot signals the at least one neighboring cell feedback parameter that maximizes the predefined neighboring cell quality criterion for receiving at the mobile station MS interference signals from the one of the base stations BS1, BS2 which operates the at least one neighboring radio cell C1, ..., C6 with the constraint that the serving channel receive weights as determined for serving radio cell C1, C2, C6 by using the predefined serving cell quality criterion are also applied as fixed receive weights for the determination of the at least one neighboring cell feedback parameter.

The mobile station MS further contains a memory module MEM-MS. The memory module MEM-MS is configured to store a computer program PROG-MS for operating the processer PU-MS by executing the steps of the method MET-MS. The memory module MEM-MS may be further configured to store for example the mapping tables between the SINR values and the CQI values.

Figure 5 shows exemplarily the scheduler apparatus SA, which executes the method MET-SA (see Figure 3 and Figure 5).

The scheduler apparatus SA may contain a transceiver apparatus TRC-SA. Alternatively, the scheduler apparatus SA may contain more than one transceiver apparatus. The transceiver apparatus TRC-SA contains a transmitter apparatus TS-SA and a receiver apparatus RC-SA.

The receiver apparatus RC-SA is configured to receive from at least two of the mobile stations MS1, ..., MS5 the serving cell feedback information about the at least one serving cell feedback parameter that is determined in each case by one of the at least two mobile stations MS1, ..., MS5 based on the received serving cell pilot signals and that maximizes the predefined serving cell quality criterion for receiving at the one of the at least two mobile stations MS1, ..., MS5 wanted signals from one of the base stations BS1, BS2 which operates the serving radio cell C1, C2, C6. The receiver apparatus RC-SA is further configured to receive from the at least two mobile stations MS1, ..., MS5 the neighboring cell feedback information about the at least one neighboring cell feedback parameter that is determined in each case by the one of the at least two mobile stations MS1, ..., MS5 based on the received neighboring cell pilot signals and that maximizes the predefined neighboring cell quality criterion for receiving at the one of the at least two mobile stations MS1, ..., MS5 interference signals from one of the base stations BS1, BS2 which operates the at least one neighboring radio cell C1, ..., C6 with the constraint that the serving channel receive weights as determined for the serving radio cell C1, C2, C6 by using the predefined serving cell quality criterion are also applied as the fixed receive weights for the determination of the at least one neighboring cell feedback parameter.

The transmitter apparatus TR-SA may be configured to transmit the indication whether to determine the at least one serving cell feedback parameter and the at least one neighboring cell feedback parameter for the first use case or to determine the cell feedback parameters for one of the further use cases.

The scheduler apparatus SA further contains a processing unit or a processor PU-SA which is configured to execute the steps of the method MET-SA. Alternatively, the scheduler apparatus SA contains more than one processing unit or processor for executing the steps of the method MET-SA.

The processor PU-SA is configured to determine based on the at least one serving cell feedback parameter and based on the at least one neighboring cell feedback parameter the set of mobile stations that maximizes the predefined scheduler criterion.

The scheduler apparatus SA further contains a memory module MEM-SA. The memory module MEM-SA is configured to store a computer program PROG-SA for operating the processer PU-SA by executing the steps of the method MET-SA. The memory module MEM-SA may be further configured to store for example the mapping tables between the SINR values and the CQI values and the priority matrix.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET-MS, MET-SA disclosed in the specification or in the claims may be implemented by a device having means for performing each of the respective steps of these methods. Preferably, a computer program product may contain computer-executable instructions for performing one of the methods MET-MS, MET-SA, when the computer program product is executed on at least one programmable hardware device such as a DSP, an ASIC or an FPGA. Preferably, a digital data storage device may encode a machine-executable program of instructions to perform one of the methods MET-MS, MET-SA.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (MET-MS) for reporting channel feedback in a radio communication system (RCS) comprising:

   - receiving (S2, S3) serving cell pilot signals of a serving radio cell (C1, C2, C6) and neighboring cell pilot signals of at least one neighboring radio cell (C1, ..., C6) of said serving radio cell (C1, C2, C6),
   - determining (S4) for said serving radio cell (C1, C2, C6) based on said received serving cell pilot signals at least one serving cell feedback parameter that maximizes a predefined serving cell quality criterion for receiving at a mobile station (MS, MS1, ..., MS5) wanted signals from a base station (BS1, BS2) operating said serving radio cell (C1, C2, C6),

- determining (S5) for said at least one neighboring radio cell (C1, ..., C6) based on said received neighboring pilot signals at least one neighboring cell feedback parameter that maximizes a predefined neighboring cell quality criterion for receiving at said mobile station (MS, MS1, ..., MS5) interference signals from a base station (BS1, BS2) operating said at least one neighboring radio cell (C1, ..., C6) with a constraint that serving channel receive weights as determined for said serving radio cell (C1, C2, C6) using said predefined serving cell quality criterion are applied as fixed receive weights for a determination of said at least one neighboring cell feedback parameter, and

- transmitting (S6) serving cell feedback information about said at least one serving cell feedback parameter and neighboring cell feedback information about said at least one neighboring cell feedback parameter.

2. The method (MET-MS) according to claim 1, wherein said determining (S4) of said at least one serving cell transmission parameter comprises determining at least one combination of a serving cell pre-coding vector and of said serving channel receive weights that maximizes said predefined serving cell quality criterion and wherein said determining (S5) of said at least one neighboring cell feedback parameter comprises determining at least one combination of a neighboring cell pre-coding vector and of said serving channel receive weights that maximizes said predefined neighboring cell quality criterion.

3. The method (MET-MS) according to any of the preceding claims, wherein said determining (S4) of said at least one serving cell feedback parameter comprises determining a serving cell signal-to-interference-and-noise ratio $SINR_{n,k}$ and a channel quality identifier $CQI_{n,k}$ for said mobile station (MS, MS1, ..., MS5) for a transmission channel from said serving radio cell (C1, C2, C6) to said mobile station (MS, MS1, ..., MS5) according to equations

$$SINR_{n,k} = \frac{S_{n,k}}{I_k + N'}, \; CQI_{n,k} = f^{-1}\left(SINR_{n,k}\right)$$ with $k$ being an index and identifier for said mobile station (MS, MS1, ..., MS5), $n$ being an index and identifier for said serving radio cell (C1, C2, C6), $S_{n,k}$ being a signal strength value measured by said mobile station (MS, MS1, ..., MS5) for wanted signals received via said transmission channel from said serving radio cell (C1, C2, C6) to said mobile station (MS, MS1, ..., MS5), $I_k$ being an out of cluster interference strength value measured by said mobile station (MS, MS1, ..., MS5) and N being a noise strength value for thermal noise and wherein said determining (S5) of said at least one neighboring cell feedback parameter comprises determining at least one neighboring cell signal-to-interference-and-noise ratio $SINR_{m,k}$ and a channel quality identifier for said mobile station (MS, MS1, ..., MS5) for at least one further transmission channel from said at least one neighboring radio cell (C1, ..., C6) to said mobile station (MS, MS1, ..., MS5) according to equations $$SINR_{m,k} = \frac{I_{m,k}}{I_k + N}, \; CQI_{m,k} = f^{-1}\left(SINR_{m,k}\right) =$$

with $m$ being an identifier for said at least one neighboring radio cell (C1, ..., C6)and $I_{m,k}$ being an interference strength value measured by said mobile station (MS, MS1, ..., MS5) for interference signals received via said at least one transmission channel from said at least one neighboring radio cell (C1, ..., C6) to said mobile station (MS, MS1, ..., MS5) or wherein said determining (S4) of said at least one serving cell feedback parameter and said determining (S5) of said at least one neighboring cell feedback parameter comprises determining channel quality identifiers $CQI_{m,n,k}$ according to equation $$CQI_{m,n,k} = f^{-1}\left(\frac{I_{m,k}}{S_{n,k}}\right).$$

4. The method (MET-MS) according to any of the preceding claims, wherein said at least one serving cell feedback parameter and said at least one neighboring cell feedback parameter are determined for coordinated scheduling coordinated beamforming as a first use case and wherein said method (MET-MS) further comprises receiving (S1) an indication to determine said at least one serving cell feedback parameter and said at least one neighboring cell feedback parameter for said first use case or to determine cell feedback parameters for a further use case.

5. The method (MET-MS) according to claim 4, wherein said further use case is fast cell switching or joint transmission or dynamic point blanking.

6. The method (MET-MS) according to claim 5, wherein said method (MET-MS) further comprises for said fast cell switching determining (S4-1) at least one serving cell fast cell switching feedback parameter in a same way as said at least one serving cell feedback parameter that maximizes said predefined serving cell quality criterion, determining (S5-1) at least one neighboring cell fast cell switching feedback parameter independent from said serving channel receive weights that maximizes said predefined neighboring cell quality criterion and transmitting (S6-1) serving cell fast cell switching feedback information about said at least one serving cell fast cell switching feedback parameter and neighboring cell fast cell switching feedback information about said at least one neighboring cell fast cell switching feedback parameter or wherein said method (MET-MS) further comprises for said joint transmission determining (S4-2) at least one joint transmission feedback parameter for each of at least two radio cells of a cooperative multipoint cluster that maximizes a predefined joint transmission criterion and transmitting (S6-2) joint transmission feedback information about said joint transmission feedback parameters or wherein for said dynamic point blanking said at least one serving cell feedback parameter and said at least one neighboring cell feedback parameter are determined and said serving cell feedback information and said neighboring cell feedback information are transmitted or wherein said method (MET-MS) further comprises for said dynamic point blanking determining based on said received neighboring cell pilot signals at least one dynamic point blanking feedback parameter for at least one neighboring radio cell of a cooperative multipoint cluster and for a sub-frequency bandwidth of an overall frequency bandwidth of said at least one neighboring radio cell or for said overall frequency bandwidth with said constraint that said serving channel receive weights are applied as said fixed receive weights for a determination of said at least one dynamic point blanking feedback parameter and transmitting dynamic point blanking feedback information about said at least one dynamic point blanking feedback parameter.

7. A method (MET-SA) for determining a set of mobile stations to be scheduled in a radio communication system (RCS) comprising:

- receiving (T2) from at least two mobile stations (MS, MS1, ..., MS5) serving cell feedback information about at least one serving cell feedback parameter that is determined in each case by one of said at least two mobile stations (MS, MS1, ..., MS5) based on received serving cell pilot signals and that maximizes a predefined serving cell quality criterion for receiving at said one of said at least two mobile stations (MS, MS1, ..., MS5) wanted signals from a base station (BS1, BS2) operating said serving radio cell (C1, C2, C6),
- receiving (T2) from said at least two mobile stations (MS, MS1, ..., MS5) neighboring cell feedback information about at least one neighboring cell feedback parameter that is determined in each case by said one of said at least two mobile stations (MS, MS1, ..., MS5) based on received neighboring cell pilot signals and that maximizes a predefined neighboring cell quality criterion for receiving at said one of said at least two mobile stations (MS, MS1, ..., MS5) interference signals from a base station (BS1, BS2) operating said at least one neighboring radio cell (C1, ..., C6) with a constraint that serving channel receive weights as determined for said serving radio cell (C1, C2, C6) using said predefined serving cell quality criterion are applied as fixed receive weights for a determination of said at least one neighboring cell feedback parameter, and
- determining (T4) based on said at least one serving cell feedback parameter and based on said at least one neighboring cell feedback parameter said set of mobile stations that maximizes a predefined scheduler criterion.

8. The method (MET-SA) according to claim 7, wherein said determining (T4) of said set of mobile stations determines said set of mobile stations by applying a Greedy algorithm.

9. The method (MET-SA) according to claim 7 or claim 8, wherein said determining (T4) of said set of mobile stations comprises:

- determining interference strength values $I_{m,k}$ according to equation

$$I_{m,k} = \frac{f(CQI_{m,k})}{f(CQI_{n,k})}$$

with $m$ being an identifier for said at least one neighboring radio cell (C1, ..., C6), k being an index and identifier for said one of said at least two mobile stations (MS, MS1, ..., MS5) located in said serving radio cell (C1, C2, C6), $n$ being an index and identifier for said serving radio cell (C1, C2, C6), $f(CQI_{n,k})$ being a function for a channel quality identifier $CQI_{n,k}$ of said one of said at least two mobile stations (MS, MS1, ..., MS5) for a transmission channel from said serving radio cell (C1, C2, C6) to said one of said at least two mobile stations (MS, MS1, ..., MS5) and $f(CQI_{n,k})$ being a function for a channel quality identifier $CQI_{m,k}$ of said one of said at least two mobile stations (MS, MS1, ..., MS5) for at least one further transmission channel from said at least one neighboring radio cell (C1, ..., C6) to said one of said at least two mobile stations (MS, MS1, ..., MS5), and
- determining further interference strength values $I_{m,k,l}$ for said one of said at least two mobile stations (MS, MS1, ..., MS5) when at least one further of said at least two mobile stations (MS, MS1, .., MS5) is scheduled by said at least one neighboring radio cell (C1, ..., C6) according to equation

$$I_{m,k,l} = w_{m,k}^H w_{m,l} I_{m,k}$$

with *l* being an index and identifier for said at least one further of said at least two mobile stations (MS, MS1, ..., MS5) located in said at least one neighboring radio cell (C1, ..., C6), $w_{m,k}^H$ being a vector for an equivalent multiple input single output channel for a transmission channel from said at least one neighboring radio cell (C1, ..., C6) to said one of said at least two mobile stations (MS, MS1, ..., MS5) and $W_{m,l}$ being a pre-coding vector assumed for serving said at least one further of said at least two mobile stations (MS, MS1, ..., MS5) by said at least one neighboring radio cell (C1, ..., C6).

10. The method (MET-SA) according to claim 9, wherein said determining of said interference strength values $I_{m,k}$ assumes a signal strength value $S_{n,k}$ for receiving wanted signals at said one of said at least two mobile stations (MS, MS1, ..., MS5) from said serving radio cell (C1, C2, C6) in equation

$$SINR_{n,k} = \frac{S_{n,k}}{I_k + N} = f\big(CQI_{n,k}\big)$$

being normalized to one with $S_{n,k}$ being a signal strength value measured by said mobile station (MS, MS1, ..., MS5) for wanted signals received via said transmission channel from said serving radio cell (C1, C2, C6) to said mobile station (MS, MS1, ..., MS5), $I_k$ being an out of cluster interference strength value measured by said mobile station (MS, MS1, ..., MS5), and N being a noise strength value for thermal noise.

11. The method (MET-SA) according to claim 9 or claim 10, wherein said equivalent multiple input single output channel corresponds to a product of said serving cell receive weights $g_{n,k}$ of said one of said at least two mobile stations (MS, MS1, ..., MS5) for a reception of signals transmitted from said at least one neighboring radio cell (C1, ..., C6) and of a transmission channel matrix $H_{m,k}$ describing a transmission of said signals from said at least one neighboring radio cell (C1, ..., C6) to antenna elements (AE1-MS-k, AE2-MS-k) of said one of said at least two mobile stations (MS, MS1, .., MS5).

12. The method (MET-SA) according to any of the preceding claims 9 to 11, wherein in a first alternative said determining (T4) of said set of mobile stations is only based on pre-coding vectors as indicated by said serving cell feedback information and said neighboring cell feedback information or wherein in a second alternative said method (MET-SA) further comprises determining (T3) at least two preliminary sets of mobile stations, and wherein said determining (T4) of said set of mobile stations determines a final set of mobile stations by applying an optimization algorithm based on said determined at least two preliminary sets of mobile stations and based on at least one serving cell pre-coding vector not indicated by said serving cell feedback information.

13. A computer program having a program code for performing said method (MET-MS) according to any of the claims 1 to 6 or said method (MET-SA) according to any of the claims 7 to 12, when said computer program is executed on at least one computer or at least one processor.

14. A mobile station (MS, MS1, ..., MS5) for reporting channel feedback in a radio communication system (RCS) comprising:

- at least one receiver apparatus (RC-MS) configured to receive serving cell pilot signals of a serving radio cell (C1, C2, C6) and neighboring cell pilot signals of at least one neighboring radio cell (C1, ..., C6) of said serving radio cell (C1, C2, C6),
- at least one processor (PU-MS) configured to determine for said serving radio cell (C1, C2, C6) based on said received serving cell pilot signals at least one serving cell feedback parameter that maximizes a predefined serving cell quality criterion for receiving at said mobile station (MS, MS1, ..., MS5) wanted signals from a base station (BS1, BS2) operating said serving radio cell (C1, C2, C6) and further configured to determine for said at least one neighboring radio cell (C1, ..., C6) based on said received neighboring pilot signals at least one neighboring cell feedback parameter that maximizes a predefined neighboring cell quality criterion for receiving at said mobile station (MS, MS1, ..., MS5) interference signals from a base station (BS1, BS2) operating said at least one neighboring radio cell (C1, ..., C6) with a constraint that serving channel receive weights as determined for said serving radio cell (C1, C2, C6) using said predefined serving cell quality criterion are applied as fixed receive weights for a determination of said at least one neighboring cell feedback parameter, and
- at least one transmitter apparatus (TR-MS) configured to transmit serving cell feedback information about said at least one serving cell feedback parameter and neighboring cell feedback information about said at least one neighboring cell feedback parameter.

15. A scheduler apparatus (SA) for determining a set of mobile stations to be scheduled in a radio communication system (RCS) comprising:

- at least one receiver apparatus (RC-SA) configured to receive from at least two mobile stations (MS, MS1, ..., MS5) serving cell feedback information about at least one serving cell feedback parameter that is determined in each case by one of said at least two mobile stations (MS, MS1, ..., MS5) based on received serving cell pilot signals and that maximizes a predefined serving cell quality criterion for receiving at said one of said at least two mobile stations (MS, MS1, ..., MS5) wanted signals from a base station (BS1, BS2) operating said serving radio cell (C1, C2, C6) and further configured to receive from said at least two mobile stations (MS, MS1, ..., MS5) neighboring cell feedback information about at least one neighboring cell feedback parameter that is determined in each case by said one of said at least two mobile stations (MS, MS1, ..., MS5) based on received neighboring cell pilot signals and that maximizes a predefined neighboring cell quality criterion for receiving at said one of said at least two mobile stations (MS, MS1, ..., MS5) interference signals from a base station (BS1, BS2) operating said at least one neighboring radio cell (C1, ..., C6) with a constraint that serving channel receive weights as determined for said serving radio cell (C1, C2, C6) using said predefined serving cell quality criterion are applied as fixed receive weights for a determination of said at least one neighboring cell feedback parameter, and
- at least one processor (PU-SA) configured to determine based on said at least one serving cell feedback parameter, based on said at least one neighboring cell feedback parameter said set of mobile stations that maximizes a predefined scheduler criterion.

FIG. 1

MET-MS

START

S1 — Receiving indication for feedback generating scheme

S2 — Receiving pilot signals of serving radio cell

S3 — Receiving further pilot signals of neighboring radio cell(s)

S4 — Determining at least one serving cell feedback parameter for coordinated scheduling coordinated beamforming

S4-1 — Determining at least one serving cell fast cell switching feedback parameter for fast cell switching

S4-2 — Determining at least one joint transmission feedback parameter

S5 — Determining at least one neighboring cell feedback parameter for coordinated scheduling coordinated beamforming

S5-1 — Determining at least one neighboring cell fast cell switching feedback parameter for fast cell switching

S6 — Transmitting serving cell feedback information and neighboring cell feedback information

S6-1 — Transmitting FCS serving cell feedback information and FCS neighboring cell feedback information

Transmitting joint transmission feedback information

S6-2

END

*FIG. 2*

MET-SA

T1 — Transmitting indication for feedback generating scheme

START

T2 — Receiving serving cell feedback information and neighboring cell feedback information from mobile stations

T3 — Determining preliminary sets of mobile stations

T4 — Determining (final) set of mobile stations

END

*FIG. 3*

*Receive Signal* $RS_{n,k}$    *Receive weights* $g_{n,k}$    *Equivalent channel* $w_{n,k}^H$    *Transmission channel* $H_{n,k}$    *Precoding weights* $w_{n,k}$

AE1-MS-k

MS-k

AE1-C-n

AE2-C-n

AE3-C-n

AE2-MS-k

AE4-C-n

*Interference channel* $H_{m,k}$

AE1-C-m

AE1-MS-l

MS-l

AE2-C-m

AE3-C-m

AE2-MS-l

AE4-C-m

*Receive Signal* $RS_{m,l}$    *Receive weights* $g_{m,l}$    *Equivalent channel* $w_{m,l}^H$    *Transmission channel* $H_{m,l}$    *Precoding weights* $w_{m,l}$

## FIG. 4

GA

START

T4-1 — Chose first mobile station k so that $P_r = arg_k max(P_{k,r})$

T4-2 — Add mobile station k to set of mobile stations $S = \{k\}$

T4-3 — Add one further mobile station k' to S so that $P_r' = arg_k max(P_{S',r})$

T4-4 — $P_r' > P_r$? — no

yes

T4-5 — $S = S', P_r = P_r'$

T4-6 — More candidate mobile stations? — no

yes

T4-7 — Return optimized S

STOP

*FIG. 5*

*FIG. 6*

## FIG. 7

Europäisches
Patentamt

European
Patent Office

Office européen
des brevets

**EUROPEAN SEARCH REPORT**

Application Number

EP 14 30 7098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/242764 A1 (MAEAETTAENEN HELKA-LIINA [FI] ET AL) 19 September 2013 (2013-09-19) | 1,2,4-8, 14,15 | INV. H04W72/04 |
| A | * paragraph [0026] - paragraph [0030] * <br> * paragraph [0050] - paragraph [0056] * <br> * paragraph [0088] - paragraph [0091] * <br> * figures 1-4 * | 3,9-13 | |
| Y | ALCATEL-LUCENT: "Comparison of CSI Feedback Schemes", 3GPP DRAFT; R1-093343, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050388123, [retrieved on 2009-08-29] * paragraph 3 * | 1,2,4-8, 14,15 | |
| A | "3rd Generation Partnership Project; Technical Specification Group Radio Access Network; Coordinated multi-point operation for LTE physical layer aspects (Release 11)", 3GPP DRAFT; 36819-B20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 September 2013 (2013-09-18), XP050906314, Retrieved from the Internet: URL:http://www.3gpp.org/ftp/Specs/2014-12/ Rel-11/36_series/ [retrieved on 2013-09-18] * paragraph 5 * | 1-15 | TECHNICAL FIELDS SEARCHED (IPC) <br><br> H04W |

-/--

The present search report has been drawn up for all claims

| Place of search | Date of completion of the search | Examiner |
|---|---|---|
| Munich | 27 May 2015 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 7098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/239036 A1 (KOO JA HO [KR] ET AL) 23 September 2010 (2010-09-23) * paragraph [0012] - paragraph [0014] * * paragraph [0041] * * paragraph [0074] - paragraph [0078] * * figure 1 * | 1-15 | |
| A | LG ELECTRONICS: "Phase 1 CoMP Simulation Evaluation Results and Analysis for full buffer", 3GPP DRAFT; R1-111628 FULL BUFFER COMP EVALUATION V5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 5 May 2011 (2011-05-05), XP050491395, [retrieved on 2011-05-05] * Appendix B * | 1-15 | |

TECHNICAL FIELDS
SEARCHED      (IPC)

The present search report has been drawn up for all claims

| Place of search | Date of completion of the search | Examiner |
|---|---|---|
| Munich | 27 May 2015 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 7098

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2015

| Patent document cited in search report | | Publication date | Patent family member(s) | | Publication date |
|---|---|---|---|---|---|
| US 2013242764 | A1 | 19-09-2013 | GB | 2500391 A | 25-09-2013 |
| | | | US | 2013242764 A1 | 19-09-2013 |
| US 2010239036 | A1 | 23-09-2010 | NONE | | |

EPO FORM P0459

For more details about this annex : see Official Journal of the European Patent Office, No. 12/82